# EUROPEAN PATENT APPLICATION

(11) **EP 4 850 835 A1**
(43) Date of publication of application: **09.12.2026**
(21) Application number: 24925604.1
(22) Date of filing: 29.11.2024
(51) Int. Cl.: B23C 3/28, B23K 9/095, G01N 21/88, B23P 6/00

(54) **BATTERY MILLING METHOD, BATTERY MILLING DEVICE, AND BATTERY PRODUCTION LINE**

(30) Priority: 19.02.2024 CN 202410184080
(71) Applicant: Contemporary Amperex Technology Co., Limited, Ningde, Fujian 352100 (CN)
(72) Inventor: CHEN, Jianyun, Ningde, Fujian 352100 (CN); YIN, Zeyuan, Ningde, Fujian 352100 (CN); PENG, Chunyang, Ningde, Fujian 352100 (CN)
(74) Representative: Aera A/S
(86) International application number: PCT/CN2024/135439
(87) International publication number: WO 2025/175866

(57) **Abstract**

A battery milling method, a battery milling device, and a battery production line. The battery milling method comprises the following steps: S610: acquiring an image of a welding seam of a battery case, and acquiring the position of a welding defect by means of the image of the welding seam; and S620: on the basis of the position of the welding defect, controlling a milling mechanism (10) to move and to mill the welding defect to form a milling groove. In the method, the position of the welding defect is acquired on the basis of the image of the welding seam, and then on the basis of the position of the welding defect, the milling mechanism (10) is controlled to mill the welding defect, to prepare for subsequent filler wire welding, so that a defective battery (B) with a welding defect is repaired, thereby improving the yield of battery production. The battery case of the defective battery (B) is automatically milled by means of the battery milling device and the battery production line, thereby improving the milling efficiency and the milling quality.

## Description

### CROSS-REFERENCE TO RELATED APPLICATIONS

This application claims priority to Chinese Patent Application No. 202410184080.4, filed on February 19, 2024, which is incorporated herein by reference in its entirety.

### TECHNICAL FIELD

This application relates to the field of battery manufacturing technologies, and in particular, to a battery milling method, a battery milling device, and a battery production line.

### BACKGROUND

A battery includes a battery housing, and an electrode assembly and an electrolyte solution that are disposed in the battery housing. The electrode assembly and the electrolyte solution are both accommodated in the battery housing. The battery housing includes a housing body and a top cover, and the top cover is welded to the housing body to seal the battery housing.

Welding defects are likely to occur during welding of the top cover and the housing body, which affects the yield of battery production.

### SUMMARY

In view of the above problem, this application provides a battery milling method, a battery milling device, and a battery production line, to increase the yield of battery production.

According to a first aspect, this application provides a battery milling method, including the following steps: acquiring an image of a weld seam of a battery housing and acquiring a position of a welding defect according to the image of the weld seam; and controlling a milling mechanism to move and mill the welding defect according to the position of the welding defect to form a milled groove.

According to the battery milling method of this embodiment of this application, the position of the welding defect is acquired according to the image of the weld seam, and then the milling mechanism is controlled to mill the welding defect according to the position of the welding defect, so as to prepare for subsequent wire-filling repair welding. In this way, a defective battery having a welding defect is repaired, thereby increasing the yield of battery production. Moreover, according to the battery milling method of this embodiment of this application, a battery housing of the defective battery is automatically milled through the milling mechanism. This, compared with manual milling, improves the milling efficiency and achieves a milled groove with higher formation quality.

In some embodiments, the acquiring an image of a weld seam of a battery housing and acquiring a position of a welding defect according to the image of the weld seam includes: acquiring at least two images of at least two weld seams of the battery housing and determining whether welding defects exist in all of the at least two weld seams; and if welding defects exist in all of the at least two weld seams, acquiring positions of at least two welding defects according to the at least two images.

According to the battery milling method of these embodiments of this application, images of all weld seams of the battery housing are acquired before milling, and then the image of each weld seam is analyzed to determine whether a welding defect exists; and if a welding defect exists, the positions of all welding defects are recorded, and then in a subsequent process, the milling mechanism is controlled to sequentially mill all the welding defects. Thus, image acquisition is prevented from being performed between the multiple times of milling, so as not to cause interruption of the milling operation of the milling mechanism, thereby improving the efficiency.

In some embodiments, the controlling a milling mechanism to move and mill the welding defect according to the position of the welding defect includes: controlling the milling mechanism to sequentially mill the welding defects of the at least two weld seams.

According to the battery milling method of these embodiments of this application, after the images of all the weld seams are acquired, the milling mechanism is controlled to sequentially mill the welding defects of the at least two weld seams, realizing continuous milling of the milling mechanism, thereby improving the operation efficiency.

In some embodiments, after the milling mechanism is controlled to mill the welding defect of one weld seam, the battery is rotated to change a position of the battery relative to the milling mechanism, and the milling mechanism is controlled to mill the welding defect of another weld seam of the battery.

According to the battery milling method of these embodiments of this application, after the milling mechanism is controlled to mill the welding defect of one weld seam, the defective battery is rotated to change the position of the defective battery relative to the milling mechanism, and the milling mechanism is controlled to mill the welding defect of another weld seam of the battery housing, so that the position of the defective battery can be flexibly adapted to the milling operation of the milling mechanism, thereby improving the efficiency.

In some embodiments, the acquiring an image of a weld seam of a battery housing includes acquiring the image of the weld seam through a vision camera.

According to the battery milling method of these embodiments of this application, the image of the weld seam is acquired through a vision camera, which achieves high detection efficiency and can improve the accuracy of acquiring the position of the welding defect.

In some embodiments, the battery milling method further includes: acquiring a length of the welding defect in an extending direction of the weld seam according to the image of the weld seam, acquiring a length of the milled groove according to the length of the welding defect, and controlling the milling mechanism to perform milling according to the length of the milled groove.

According to the battery milling method of these embodiments of this application, the length of the welding defect is acquired according to the image of the weld seam, and the length of the milled groove is acquired through calculation according to the length of the welding defect, so that the length of the milled groove is adapted to the length of the welding defect, thereby achieving all-round repair of the welding defect and improving the repair quality.

In some embodiments, the length of the milled groove is greater than the length of the welding defect. Setting the length of the milled groove to be greater than the length of the welding defect allows the milled groove to cover the entire welding defect, thereby preventing residue of the welding defect and improving the repair quality.

In some embodiments, the length of the milled groove is 4 mm to 16 mm. Setting the length of the milled groove within this range not only ensures the coverage for the welding defect, but also prevents the battery housing from being milled through due to milling at a position without a welding defect when the milled groove has an excessive length.

In some embodiments, the battery milling method further includes, before the acquiring an image of a weld seam of a battery housing, detecting tightness of the battery housing. Before the image of the weld seam is acquired, the tightness of the battery housing is first detected. If the tightness of the battery housing does not meet requirements, the battery is directly rejected, so that the subsequent image acquisition and milling processes are omitted, thereby improving the overall work efficiency. If the tightness of the battery housing meets the requirements, the subsequent image acquisition step and milling step are performed.

In some embodiments, the battery milling method further includes: detecting tightness of the battery housing during milling, and if air leakage of the battery housing is detected during milling, rejecting the battery.

In some embodiments, the detecting tightness of the battery housing during milling includes applying a positive pressure into the battery housing for detection. A pressure of the battery housing of the defective battery is maintained by positive pressure application, to detect whether there is air leakage in a battery cell, which achieves high detection accuracy.

In some embodiments, the welding defect includes at least one of a formation defect and a joint defect.

In some embodiments, the formation defect includes at least one of a burst spot defect, a pinhole defect, a pit defect, and a shrinkage cavity defect.

In some embodiments, the joint defect includes cracks and/or undercuts.

According to a second aspect, this application provides a battery milling device, including an image acquisition mechanism, a milling mechanism, and a controller. The image acquisition mechanism is configured to acquire an image of a weld seam of a battery housing. The milling mechanism is configured to perform milling. The controller is electrically connected to the image acquisition mechanism and the milling mechanism; the controller is configured to acquire a position of a welding defect according to the image of the weld seam acquired by the image acquisition mechanism; and the controller is further configured to control the milling mechanism to move and mill the welding defect according to the position of the welding defect to form a milled groove.

According to the battery milling device of these embodiments of this application, the position of the welding defect is acquired according to the image of the weld seam, and then the milling mechanism is controlled to mill the welding defect according to the position of the welding defect, so as to prepare for subsequent wire-filling repair welding. In this way, a battery having a welding defect is repaired, thereby increasing the yield of battery production. Moreover, the battery milling device according to this embodiment of this application implements automatic milling of the battery housing by using the milling mechanism. Compared with manual milling, the automatic milling improves the milling efficiency and achieves a milled groove with higher formation quality.

In some embodiments, the image acquisition mechanism is configured to acquire at least two images of at least two weld seams of the battery housing, and the controller is configured to determine whether welding defects exist in all of the at least two weld seams according to the at least two images; and if welding defects exist in all of the at least two weld seams, positions of at least two welding defects are acquired according to the at least two images.

The image acquisition mechanism according to these embodiments of this application acquires images of all weld seams of the battery housing before milling, and then analyzes the image of each weld seam to determine whether a welding defect exists. If a welding defect exists, the positions of all the welding defects are recorded, and then in a subsequent process, the milling mechanism is controlled to sequentially mill all the welding defects. Thus, image acquisition is prevented from being performed between the multiple times of milling, so as not to cause interruption of the milling operation of the milling mechanism, thereby improving the efficiency.

In some embodiments, the image acquisition mechanism includes a vision camera. The image acquisition mechanism according to these embodiments of this application includes the vision camera, so that the image of the weld seam is acquired through the vision camera, which achieves high detection efficiency and improves the accuracy of acquiring the position of the welding defect.

In some embodiments, the vision camera is configured to be movably disposed in a plane parallel to a top surface of the battery housing. The vision camera according to these embodiments of this application is configured to be movable in the plane parallel to the top surface of the battery housing, so that all the weld seams can be photographed by just controlling the vision camera to move in the plane, achieving simple operation and wide coverage.

In some embodiments, the battery milling device further includes a fixture. The fixture includes a rotating platform and a clamping mechanism disposed on the rotating platform. The clamping mechanism is configured to clamp a defective battery, and the rotating platform is rotatably disposed to drive the clamping mechanism to rotate so as to change a position of the defective battery.

In these embodiments of this application, by the provision of the rotating platform, a posture of the defective battery can be conveniently adjusted, so that welding defects on different weld seams are milled, facilitating control.

In some embodiments, the battery milling device further includes a positive pressure application mechanism, and the positive pressure application mechanism is configured to apply a positive pressure into the battery housing for detection.

According to a third aspect, this application provides a battery production line, including a battery milling device and a battery repair welding device, where the battery repair welding device is configured to perform repair welding on a milled groove.

In the battery production line according to this embodiment of this application, the battery milling device is first used to mill a welding defect existing on a battery housing of a defective battery, and after milling, the battery repair welding device is used to perform wire-filling repair welding on a milled groove. In this way, the defective battery originally having a welding defect is repaired into a qualified battery, thereby reducing the scrap rate of batteries.

In some embodiments, the battery repair welding device includes a wire feeding mechanism, and the wire feeding mechanism is configured to provide a length of a welding wire according to a length of the milled groove. The wire feeding mechanism provides the length of the welding wire according to the length of the milled groove, to ensure that the length of the welding wire is adapted to the length of the milled groove, thereby improving the repair welding effect.

The above description is only an overview of the technical solutions of this application. To understand the technical means of this application more clearly so that they can be implemented in accordance with the content of the specification, and to make the above and other objectives, features, and advantages of this application more obvious and easier to understand, specific embodiments of this application are specially provided below.

### BRIEF DESCRIPTION OF DRAWINGS

To more clearly illustrate the technical solutions in the embodiments of this application, the drawings required to be used in the embodiments of this application are briefly introduced below. Obviously, the drawings described below are only some embodiments of this application, and for those of ordinary skill in the art, other drawings can also be obtained according to these drawings without creative efforts.
FIG. 1 is a flowchart of a battery milling method according to some embodiments of this application;
FIG. 2 is a schematic three-dimensional structural diagram of a battery milling device according to some embodiments of this application;
FIG. 3 is a schematic structural front view of a battery milling device according to some embodiments of this application;
FIG. 4 is a schematic structural diagram of a battery fixture of a battery milling device according to some embodiments of this application;
FIG. 5 is a schematic structural diagram of an image acquisition mechanism of a battery milling device according to some embodiments of this application;
FIG. 6 is a schematic structural diagram of a positive pressure application mechanism of a battery milling device according to some embodiments of this application; and
FIG. 7 is a schematic structural diagram of a milling mechanism according to some embodiments of this application.

In the drawings, the figures are not drawn to actual scale.

Reference signs:
milling mechanism 10; milling head 11; fifth moving mechanism 12; sixth moving mechanism 13;
fixture 20; clamping mechanism 21; first moving mechanism 22; rotating platform 23;
image acquisition mechanism 30; vision camera 31; second moving mechanism 32; third moving mechanism 33;
positive pressure application mechanism 40; pressurization head 41; fourth moving mechanism 42; rotating mechanism 43;
first direction Z; second direction Y; third direction X; and defective battery B.

### DESCRIPTION OF EMBODIMENTS

Unless otherwise defined, all technical and scientific terms used herein have the same meaning as commonly understood by those of ordinary skill in the art to which this application pertains; the terms used herein are only for the purpose of describing specific embodiments and are not intended to limit this application; and the terms "include", "comprise", "have", and any variations thereof in the specification and claims of this application and the above description of the drawings are intended to cover non-exclusive inclusion.

In the description of the embodiments of this application, the technical terms "first", "second", and the like are only used to distinguish different objects, and cannot be understood as indicating or implying relative importance or implicitly indicating the number, specific order, or primary-secondary relationship of the indicated technical features. In the description of the embodiments of this application, "multiple" means two or more, unless otherwise clearly and specifically defined.

Reference to "embodiment" herein means that a specific feature, structure, or characteristic described in connection with this embodiment may be included in at least one embodiment of this application. The appearance of this phrase in various places in the specification does not necessarily refer to the same embodiment, nor is it an independent or alternative embodiment mutually exclusive with other embodiments. It is explicitly and implicitly understood by those skilled in the art that the embodiments described herein may be combined with other embodiments.

In the description of the embodiments of this application, the term "and/or" is only an association relationship describing associated objects, representing that three relationships may exist. For example, A and/or B may indicate the following three cases: only A exists, both A and B exist, and only B exists. In addition, the character "/" herein generally indicates that the contextually associated objects are in an "or" relationship.

In the description of the embodiments of this application, the term "multiple" means two or more (including two). Similarly, "multiple groups" refers to two or more groups (including two groups), and "multiple pieces" refers to two or more pieces (including two pieces).

In the description of the embodiments of this application, the orientation or positional relationship indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on the orientation or positional relationship shown in the drawings, which are only for convenience of describing the embodiments of this application and simplifying the description, rather than indicating or implying that the apparatus or element referred to must have a specific orientation and be constructed and operated in a specific orientation, and therefore cannot be understood as a limitation on the embodiments of this application.

In the description of the embodiments of this application, unless otherwise clearly specified and defined, the technical terms such as "mounting", "connection", "join", and "fastening" should be understood in a broad sense. For example, it may be a fixed connection, a detachable connection, or an integral connection; it may be a mechanical connection or an electrical connection; it may be a direct connection, or an indirect connection through an intermediate medium; and it may be internal communication between two elements or an interaction relationship between two elements. For those of ordinary skill in the art, the specific meanings of the above terms in the embodiments of this application can be understood according to specific circumstances.

In this application, the battery may be a lithium-ion battery, a lithium-sulfur battery, a sodium-lithium-ion battery, a sodium-ion battery, a magnesium-ion battery, or the like, which is not limited in the embodiments of this application. A battery cell includes a battery housing and an electrode assembly accommodated in the battery housing, and the battery housing is filled with an electrolyte. The electrode assembly is a component in the battery cell where electrochemical reactions take place, and an inner cavity of the battery housing forms an internal environment of the battery cell. The battery housing includes a housing body and a top cover. The top cover covers an opening of the housing body to isolate the internal environment of the battery cell from the external environment. The top cover is connected to the housing body (such as an aluminum shell) by welding. The housing body is a cuboid structure with an opening. The housing body includes a bottom wall and a circumferentially enclosed side wall. The opening of the housing body is opposite the bottom wall. The top cover is welded to the opening of the housing body. In other words, the top cover is welded to a top end of the side wall.

During research, it has been found that due to external environmental pollution to the housing body or the top cover or due to other reasons, welding defects are likely to occur during welding of the housing body and the top cover. In current production processes, defective batteries having welding defects are scrapped. This leads to an increase in quantity of scrapped batteries and thus causes an increase in manufacturing costs.

To address the above problems, this application proposes a battery milling method and a battery milling device. For a defective battery having a welding defect, a milling mechanism is controlled to mill a position where the welding defect is located, so as to prepare for a subsequent wire-filling repair welding process. Thus, the defective battery having a welding defect is repaired, thereby increasing the yield of battery production.

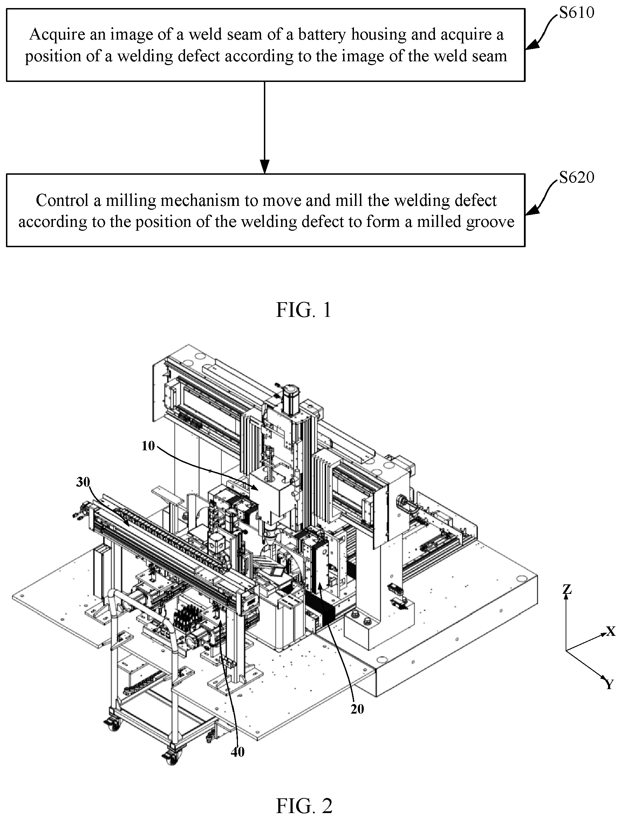

The following describes in detail a battery milling method and a battery milling device according to some embodiments of this application with reference to FIG. 1 to FIG. 7.

Referring to FIG. 1, a battery milling method according to some embodiments of this application is used for milling a welding defect of a defective battery, including the following steps:
S610, acquiring an image of a weld seam of a battery housing and acquiring a position of the welding defect according to the image of the weld seam; and
S620, controlling a milling mechanism to move and mill the welding defect according to the position of the welding defect to form a milled groove.

The weld seam of the battery housing refers to a joint formed by welding an edge of a top cover and an edge of the housing body. In some embodiments, the weld seam of the battery housing is located on a top surface, and in some other embodiments, the weld seam of the battery housing is located on a side surface. This is not limited in the battery milling method according to the embodiments of this application. A square battery housing includes four weld seams that are sequentially disposed in a circumferential direction. Therefore, the four weld seams may be located on a side surface of the battery housing, or may be located on a top surface of the battery housing. In some embodiments, the acquiring an image of a weld seam of a battery housing includes first acquiring images of all weld seams of the battery housing before milling and acquiring positions of all the welding defects according to the images of all the weld seams, and then controlling the milling mechanism to sequentially mill the welding defects. For example, for a square battery housing, images of four weld seams are acquired before milling. In some other embodiments, the acquiring an image of a weld seam of a battery housing includes first acquiring an image of one weld seam, then controlling the milling mechanism to mill the welding defect of the weld seam, then continuing to acquire an image of another weld seam, and then controlling the milling mechanism to mill the welding defect of the another weld seam.

It should also be explained here that the acquiring an image of a weld seam of a battery housing refers to acquiring the image of the entire weld seam. Specifically, during acquisition, a vision camera is controlled to take photos for multiple times along an extending direction of a weld seam to obtain multiple sub-images, and then the multiple sub-images are spliced to form a complete image of the entire weld seam. Subsequently, whether a welding defect exists is determined according to the image of the weld seam. If a welding defect exists, a position of the welding defect is acquired according to the image of the weld seam.

The controlling the milling mechanism to move according to the position of the welding defect refers to controlling, by using the position where the welding defect is located as a target position, the milling mechanism to move to the position where the welding defect is located. Subsequently, the milling mechanism is controlled to perform milling at the position where the welding defect is located to form a milled groove. In other words, the milling mechanism first needs to move to the position where the welding defect is located, such as a first position in the extending direction of the welding defect, and then the milling mechanism needs to move toward a second position along the extending direction of the welding defect and perform milling to form a milled groove.

According to the battery milling method of these embodiments of this application, the position of the welding defect is acquired according to the image of the weld seam, and then the milling mechanism is controlled to mill the welding defect according to the position of the welding defect, so as to prepare for subsequent wire-filling repair welding. In this way, a defective battery having a welding defect is repaired, thereby increasing the yield of battery production. Moreover, according to the battery milling method of these embodiments of this application, the milling mechanism is used to automatically mill the battery housing of the defective battery. Compared with manual milling, the automatic milling improves the milling efficiency and achieves a milled groove with higher formation quality.

In some embodiments, the welding defect includes at least one of a formation defect and a joint defect. The formation defect includes a burst spot defect, a pinhole defect, a pit defect, and a shrinkage cavity defect. The joint defect includes cracks and/or undercuts. The burst spot defect is caused by a problem of splashes (explosion fire). There are many factors that cause splashes, such as the cleanliness of the housing body or the top cover, or the presence of protrusions, air pores, or internal bubbles at the surface of the housing body or the top cover, all of which may cause a burst spot defect. In other words, the battery milling method according to these embodiments of this application can perform milling for any of the above welding defects to complete the repair of the defective battery.

In some embodiments, the acquiring an image of a weld seam of a battery housing and acquiring a position of a welding defect according to the image of the weld seam includes: acquiring at least two images of at least two weld seams of the battery housing and determining whether welding defects exist in all of the at least two weld seams; and if welding defects exist in all of the at least two weld seams, acquiring positions of at least two welding defects according to the at least two images.

According to the battery milling method of these embodiments of this application, images of all weld seams of the battery housing are acquired before milling, and then the image of each weld seam is analyzed to determine whether a welding defect exists; and if a welding defect exists, the positions of all welding defects are recorded, and then in a subsequent process, the milling mechanism is controlled to sequentially mill all the welding defects. Thus, image acquisition is prevented from being performed between the multiple times of milling, so as not to cause interruption of the milling operation of the milling mechanism, thereby improving the efficiency.

In some embodiments, the controlling the milling mechanism to move and mill the welding defect according to the position of the welding defect includes: controlling the milling mechanism to sequentially mill the welding defects of the at least two weld seams.

According to the battery milling method of these embodiments of this application, after the images of all the weld seams are acquired, the milling mechanism is controlled to sequentially mill the welding defects of the at least two weld seams, realizing continuous milling of the milling mechanism, thereby improving the operation efficiency.

The battery housing includes multiple weld seams, and the multiple weld seams are at different positions. For example, a square battery housing includes four weld seams. Thus, if welding defects exist in at least two weld seams, after the welding defect of one weld seam is milled, the welding defect of another weld seam needs to be milled.

In some embodiments, after the milling mechanism is controlled to mill the welding defect of one weld seam, the defective battery is rotated to change a position of the defective battery relative to the milling mechanism, and the milling mechanism is controlled to mill the welding defect of another weld seam of the battery housing.

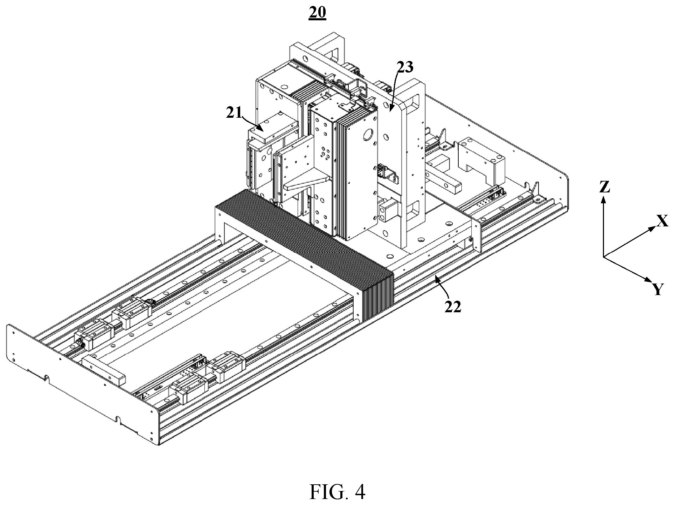

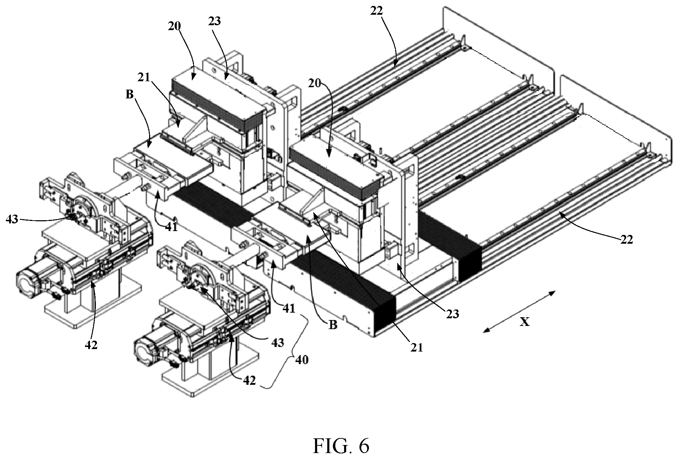

In some embodiments, referring to FIG. 4, the battery milling device includes a fixture 20. The fixture 20 includes a clamping mechanism 21 and a rotating platform 23. The clamping mechanism 21 is configured to clamp a defective battery. At a loading station, the defective battery is clamped by the clamping mechanism 21 and is in an upright state. In other words, a length direction of the defective battery extends along a first direction Z. After the clamping mechanism 21 moves from the loading station to a milling station, the rotating platform 23 rotates to drive the clamping mechanism 21 to rotate, to cause the defective battery to switch from the upright state to a lying state. Reference is made to FIG. 6, where FIG. 6 shows a lying state of a defective battery B. The defective battery being in a lying state means that a length direction of the defective battery is perpendicular to the first direction Z and perpendicular to a second direction X, that is, the length direction of the defective battery extends along a third direction Y. An arrangement state of the defective battery can be changed by controlling the rotating platform 23 to rotate. Thus, after the milling mechanism has milled the welding defect of one weld seam, the rotating platform 23 is controlled to make the milling mechanism mill the welding defects of other weld seams.

According to the battery milling method of these embodiments of this application, after the milling mechanism is controlled to mill the welding defect of one weld seam, the defective battery is rotated to change the position of the defective battery relative to the milling mechanism and the milling mechanism is controlled to mill the welding defect of another weld seam of the battery housing, so that the position of the defective battery can be flexibly adapted to the milling operation of the milling mechanism, thereby improving the efficiency.

In some embodiments, the acquiring an image of a weld seam of a battery housing includes acquiring the image of the weld seam through a vision camera.

The vision camera is controlled to take photos for multiple times along an extending direction of a weld seam to obtain multiple sub-images, and then the multiple sub-images are spliced to form a complete image of the entire weld seam. Subsequently, whether a welding defect exists is determined according to the image of the weld seam. If a welding defect exists, a position of the welding defect is acquired according to the image of the weld seam.

According to the battery milling method of these embodiments of this application, the image of the weld seam is acquired through a vision camera, which achieves high detection efficiency and can improve the accuracy of acquiring the position of the welding defect.

In some embodiments, the battery milling method further includes: acquiring a length of the welding defect in an extending direction of the weld seam according to the image of the weld seam, acquiring a length of a milled groove according to the length of the welding defect, and controlling the milling mechanism to perform milling according to the length of the milled groove.

According to the battery milling method of these embodiments of this application, after the image of the weld seam is acquired, the position of the welding defect is to be acquired according to the image of the weld seam, and the length of the welding defect is also to be acquired; in addition, the length of the milled groove is acquired according to the length of the welding defect, and then the milling mechanism is controlled to perform milling according to the length of the milled groove. The length of the welding defect mentioned here refers to a dimension of the welding defect in an extending direction of a corresponding weld seam.

According to the battery milling method of these embodiments of this application, the length of the welding defect is acquired according to the image of the weld seam, and the length of the milled groove is acquired through calculation according to the length of the welding defect, so that the length of the milled groove is adapted to the length of the welding defect, thereby achieving all-round repair of the welding defect and improving the repair quality.

In some embodiments, the length of the milled groove is greater than the length of the welding defect. Setting the length of the milled groove to be greater than the length of the welding defect allows the milled groove to cover the entire welding defect, preventing residue of the welding defect and improving the repair quality.

In some embodiments, the length of the milled groove is 4 mm to 16 mm. Setting the length of the milled groove within this range not only ensures the coverage for the welding defect, but also prevents the battery housing from being milled through due to milling at a position without a welding defect when the milled groove has an excessive length.

In some embodiments, the battery milling method further includes, before the acquiring an image of a weld seam of a battery housing, detecting tightness of the battery housing. Before the image of the weld seam is acquired, the tightness of the battery housing is first detected. If the tightness of the battery housing does not meet requirements, the battery is directly rejected, so that the subsequent image acquisition and milling processes are omitted, thereby improving the overall work efficiency. If the tightness of the battery housing meets the requirements, the subsequent image acquisition step and milling step are performed.

To prevent the milling mechanism from milling through the battery housing when milling the position where the welding defect is located, in some embodiments, the battery milling method further includes: detecting tightness of the battery housing during milling, and if air leakage of the battery housing is detected during milling, rejecting the battery. Thus, if it is detected that the tightness of the battery housing is unqualified during milling, the battery can be directly scrapped.

In some embodiments, the detecting tightness of the battery housing during milling includes applying a positive pressure into the battery housing for detection. A pressure of the battery housing of the defective battery is maintained by positive pressure application, to detect whether there is air leakage in a battery cell, which achieves high detection accuracy.

In some embodiments, a pressurization head of a positive pressure application mechanism is controlled to apply a positive pressure into the battery housing through an electrolyte injection port of the battery.

Specifically, the pressurization head is controlled to move toward the top cover of the battery housing until the pressurization head is in close contact with the top cover, and the pressurization head applies pressure through the electrolyte injection port and maintains a positive pressure; and if air leakage of the battery is detected, the battery is directly scrapped.

Referring to FIG. 2 to FIG. 6, an embodiment of this application further provides a battery milling device, including an image acquisition mechanism 30, a milling mechanism 10, and a controller. The image acquisition mechanism 30 is configured to acquire an image of a weld seam of a battery housing. The milling mechanism 10 is configured to perform milling. The controller is electrically connected to the image acquisition mechanism 30 and the milling mechanism 10, and the controller is configured to acquire a position of the welding defect according to the image of the weld seam acquired by the image acquisition mechanism 30, and the controller is further configured to control the milling mechanism 10 to move and mill the welding defect according to the position of the welding defect to form a milled groove.

According to the battery milling device of this embodiment of this application, the position of the welding defect is acquired according to the image of the weld seam, and then the milling mechanism is controlled to mill the welding defect according to the position of the welding defect, so as to prepare for subsequent wire-filling repair welding. In this way, a battery having a welding defect is repaired, thereby reducing the scrap rate of batteries. Moreover, the battery milling device according to this embodiment of this application implements automatic milling of the battery housing by using the milling mechanism. Compared with manual milling, the automatic milling improves the milling efficiency and achieves a milled groove with higher formation quality.

In some embodiments, the image acquisition mechanism 30 is configured to acquire at least two images of at least two weld seams of the battery housing. The controller is configured to determine whether welding defects exist in all of the at least two weld seams according to the at least two images; and if welding defects exist in all of the at least two weld seams, positions of at least two welding defects are acquired according to the at least two images.

The image acquisition mechanism 30 according to these embodiments of this application acquires images of all weld seams of the battery housing before milling, and then analyzes the image of each weld seam to determine whether a welding defect exists. If a welding defect exists, the positions of all the welding defects are recorded, and then in a subsequent process, the milling mechanism is controlled to sequentially mill all the welding defects. Thus, image acquisition is prevented from being performed between the multiple times of milling, so as not to cause interruption of the milling operation of the milling mechanism, thereby improving the efficiency.

In some embodiments, the image acquisition mechanism 30 includes a vision camera 31. The image acquisition mechanism 30 according to these embodiments of this application includes the vision camera 31, so that the image of the weld seam is acquired through the vision camera 31, which achieves high detection efficiency and can improve the accuracy of acquiring the position of the welding defect.

In some embodiments, the vision camera 31 is configured to be movably disposed in a plane parallel to a top surface of the battery housing.

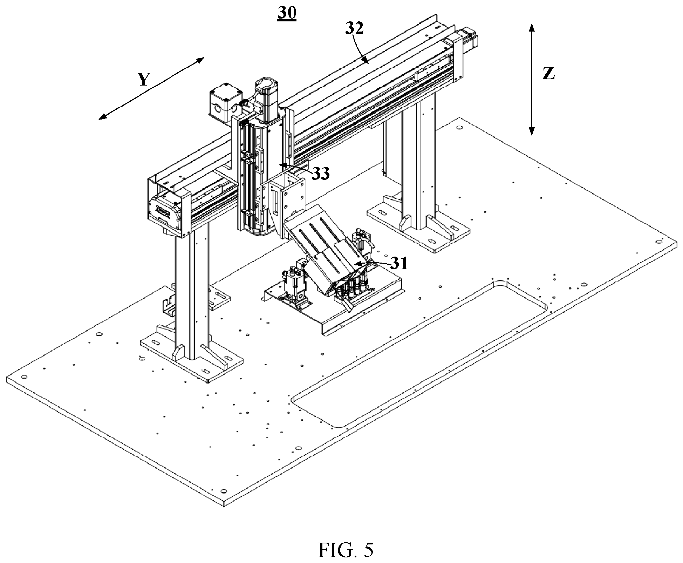

As shown in FIG. 5, the image acquisition mechanism 30 includes the vision camera 31, a second moving mechanism 32, and a third moving mechanism 33. The vision camera 31 is disposed on the third moving mechanism 33, and the third moving mechanism 33 can drive the vision camera 31 to move in a first direction Z. The third moving mechanism 33 moves along a second direction Y under the drive of the second moving mechanism 32, so as to drive the vision camera 31 to move.

The top surface of the battery housing refers to a plane where a top surface of a top cover of the battery housing is located. In a specific embodiment, the battery housing includes a housing body and a top cover. The top cover is disposed in an opening of the housing body. In other words, the housing body encloses the top cover, and then the top cover and the housing body are welded from above the housing body by a welding apparatus. Thus, all weld seams between the top cover and the housing body are located on the top surface of the battery housing.

When a defective battery arrives at a milling station, a top surface of the defective battery is disposed parallel to a plane where the first direction Z and the second direction Y are located. Therefore, the vision camera 31 is movable in this plane, which facilitates the acquisition of images of all weld seams of the battery housing.

The vision camera 31 according to these embodiments of this application is configured to be movable in the plane parallel to the top surface of the battery housing, so that all the weld seams can be photographed by just controlling the vision camera 31 to move in the plane, achieving simple operation and wide coverage.

In some other embodiments, the weld seams of the battery are located on a side surface of the battery housing. In these embodiments, the vision camera 31 needs to move around the battery housing in a circumferential direction to obtain images of all the weld seams.

In some embodiments, the battery milling device further includes a fixture 20. The fixture 20 includes a rotating platform 23 and a clamping mechanism 21 disposed on the rotating platform 23. The clamping mechanism 21 is configured to clamp a defective battery, and the rotating platform 23 is rotatably disposed to drive the clamping mechanism 21 to rotate so as to change a posture of the defective battery.

Since the battery housing of the defective battery has multiple weld seams with different extending directions, if welding defects exist in all of the different weld seams, the defective battery needs to be rotated so that the milling mechanism 10 can mill the welding defects at different positions. Specifically, the defective battery is rotated by controlling the rotating platform 23.

In these embodiments of this application, by the provision of the rotating platform 23, the posture of the defective battery can be conveniently adjusted, so that the welding defects on different weld seams are milled, facilitating control.

Referring to FIG. 6, in some embodiments, the battery milling device further includes a positive pressure application mechanism 40, and the positive pressure application mechanism 40 is configured to apply a positive pressure into the battery housing for detection.

This application further provides a battery production line, including the above battery milling device and a battery repair welding device. The battery repair welding device is configured to perform repair welding on the milled groove. In the battery production line according to this embodiment of this application, the battery milling device is first used to mill a welding defect existing on a battery housing of a defective battery, and after milling, the battery repair welding device is used to perform wire-filling repair welding on a milled groove. In this way, the defective battery originally having a welding defect is repaired into a qualified battery, thereby increasing the yield of batteries.

In some embodiments, the battery repair welding device includes a wire feeding mechanism. The wire feeding mechanism is configured to provide a length of a welding wire according to the length of the milled groove. The wire feeding mechanism provides the length of the welding wire according to the length of the milled groove, to ensure that the length of the welding wire is adapted to the length of the milled groove, thereby improving the repair welding effect.

In some embodiments, the length of the welding wire is equal to the length of the milled groove.

To further improve the accuracy, in these embodiments of this application, a vision camera is used to acquire an image of the milled groove and acquire the length of the milled groove according to the image of the milled groove, so that the length of the welding wire is better adapted to an actual length of the milled groove.

Specifically, the battery repair welding device further includes a welding wire length test mechanism. After the wire feeding mechanism outputs a set length of welding wire, the welding wire length test mechanism tests a length of the output welding wire. If the length meets requirements, the welding mechanism is controlled to perform wire-filling repair welding by using the welding wire. If the length does not meet the requirements, a cutting mechanism is controlled to cut the welding wire, and the wire feeding mechanism is controlled to feed the wire again.

The following describes in detail a structure and a milling method of a battery milling device according to a specific embodiment of this application with reference to FIG. 2 to FIG. 7.

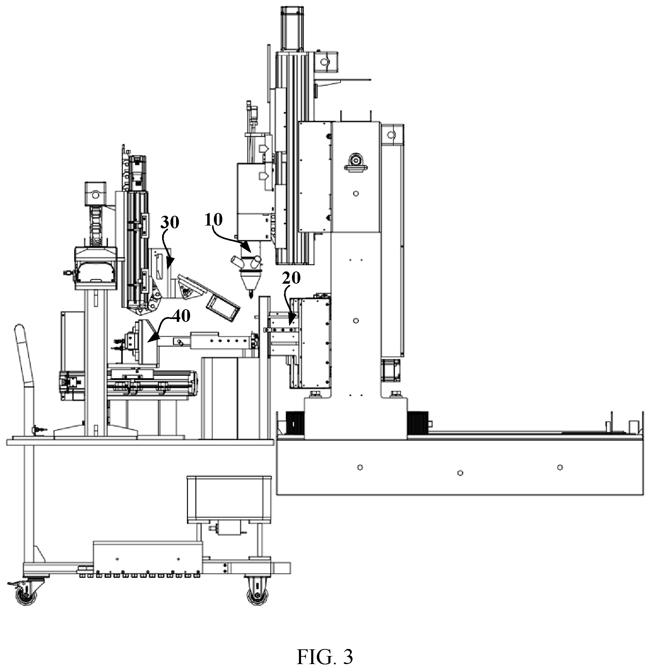

As shown in FIG. 2 and FIG. 3, the battery milling device of this embodiment includes a milling mechanism 10, a fixture 20, an image acquisition mechanism 30, and a positive pressure application mechanism 40.

As shown in FIG. 4, the fixture 20 includes a clamping mechanism 21, a rotating platform 23, and a first moving mechanism 22. The clamping mechanism 21 is configured to clamp a battery. As shown in FIG. 4, the clamping mechanism 21 includes two clamping portions disposed opposite each other, and the two clamping portions can be opened or closed to clamp or release a defective battery. Each clamping portion abuts against a major surface of the defective battery to clamp the defective battery. The clamping mechanism 21 is disposed on the rotating platform 23. The rotating platform 23 is configured to be rotatably disposed about an axis extending along a third direction X to drive the clamping mechanism 21 to rotate, so as to change a posture of the defective battery. In a state shown in FIG. 4, a clamping cavity formed between the two clamping portions extends along a first direction Z, so that when the defective battery is clamped by the clamping mechanism 21, the defective battery is in an upright state. In a state shown in FIG. 6, the clamping cavity formed between the two clamping portions extends along a second direction Y, so that when the defective battery is clamped by the clamping mechanism 21, the defective battery is in a lying state. The rotating platform 23 rotates to cause the clamping mechanism 21 to rotate from the state shown in FIG. 4 to the state shown in FIG. 6.

For a square-shell battery, when the defective battery is in a lying state, longer sides of the defective battery extend along the second direction Y, and shorter sides of the defective battery extend along the first direction Z.

As shown in FIG. 4, the fixture 20 further includes a first moving mechanism 22. The first moving mechanism 22 is configured to drive the rotating platform 23 to move along the third direction X. Referring to FIG. 2 and FIG. 4, in an initial state, the rotating platform 23 is located at a loading station (that is, a right end shown in FIG. 4); and after the defective battery is loaded onto the clamping mechanism 21, the rotating platform 23 first rotates to enable the defective battery to be in a lying state, and then moves along the third direction X to arrive at a milling station (that is, a left end shown in FIG. 4) under the drive of the first moving mechanism 22. At the milling station, the defective battery is milled by the milling mechanism 10 under the clamping of the clamping mechanism 21.

As shown in FIG. 5, the image acquisition mechanism 30 includes a vision camera 31, a second moving mechanism 32, and a third moving mechanism 33. The vision camera 31 is configured to acquire an image of a weld seam. The second moving mechanism 32 is configured to drive the vision camera to move in the second direction Y, and the third moving mechanism 33 is configured to drive the vision camera 31 to move in the first direction Z. This allows the vision camera 31 to move in all directions in a plane where the second direction Y and the first direction Z are located, so as to acquire the images of all the weld seams.

In some other embodiments, while the vision camera 31 is acquiring the images of all the weld seams, all-direction coverage may be realized by controlling the clamping mechanism 21 to rotate in combination with the movement of the vision camera 31. For example, after the clamping mechanism 21 arrives at the milling station, the vision camera 31 is started to perform defect scanning on the defective battery, and the rotating platform 23 rotates to change the posture of the defective battery, to cooperate with the vision camera to scan the welding defects of four weld seams.

As shown in FIG. 6, the positive pressure application mechanism 40 of this embodiment includes a pressurization head 41, a fourth moving mechanism 42, and a rotating mechanism 43. The pressurization head 41 is configured to be in close contact with a top cover of the battery housing to apply a positive pressure through an electrolyte injection port on the battery housing. The fourth moving mechanism 42 is configured to drive the pressurization head 41 to move in the third direction X to move close to or move away from the defective battery. The rotating mechanism 43 is configured to drive the pressurization head 41 to rotate. The positive pressure application mechanism 40 of this embodiment continuously detects airtightness of the battery housing during milling of the battery housing. According to the above description, if welding defects exist in all of multiple weld seams, after the welding defect of one weld seam is milled, the rotating platform 23 of the fixture 20 needs to be rotated to rotate the defective battery, and at this time, the rotating mechanism 43 also needs to be controlled to rotate synchronously to drive the pressurization head 41 to rotate, thereby achieving continuous detection of positive pressure application.

After the image acquisition mechanism 30 has scanned all the welding defects and has located the positions of the welding defects, the pressurization head 41 moves along the third direction X under the drive of the fourth moving mechanism 42, the pressurization head 41 is in close contact with the top cover of the defective battery, and the pressurization head 41 applies pressure through the electrolyte injection port and maintains a positive pressure of 0.2 MPa. If air leakage of the defective battery is detected, the defective battery is scrapped without milling.

In a specific embodiment, the battery housing includes a housing body and a top cover. The top cover is disposed in an opening of the housing body. In other words, the housing body encloses the top cover, and then the top cover and the housing body are welded from above the housing body by using a welding apparatus. Thus, a weld seam between the top cover and the housing body is located on a top surface of the battery housing. Therefore, the image acquisition mechanism 30 also acquires an image of the weld seam from the top surface side of the battery housing. Further, the milling mechanism 10 also mills the welding defect from the top surface side of the battery housing. The top surface side of the battery housing mentioned here refers to a top cover side of the battery housing.

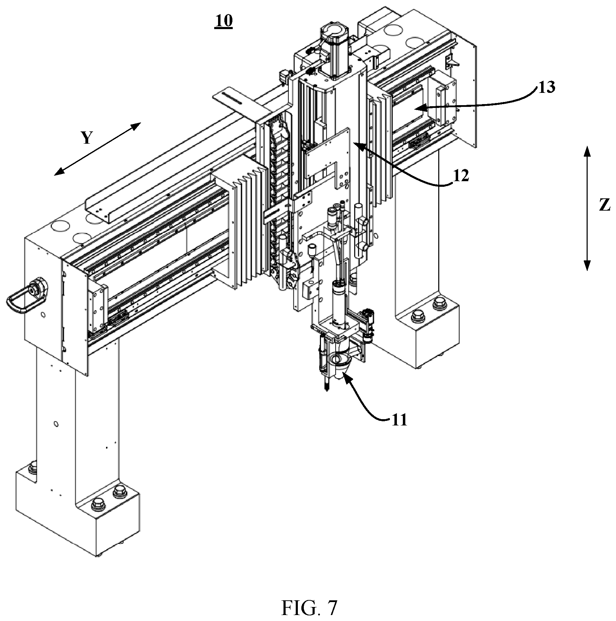

As shown in FIG. 7, the milling mechanism 10 of this embodiment includes a milling head 11, a fifth moving mechanism 12, and a sixth moving mechanism 13. The fifth moving mechanism 12 is configured to drive the milling head 11 to move in the first direction Z, and the sixth moving mechanism 13 is configured to drive the milling head 11 to move in the second direction Y. Thus, the milling head 11 is movable in a plane parallel to the top surface of the battery housing, thereby expanding a movement range and an operation range of the milling head, and improving the flexibility of the milling operation of the milling head.

For a defective battery in which the pressure is maintained normally, the milling mechanism moves in the second direction Y according to a position of the welding defect fed back by the vision camera, to accurately arrive at the position of the welding defect; and the milling head 11 mills the position where the welding defect is located, to obtain milled grooves of different specifications by milling according to a size of the welding defect. If the battery is milled through, air leakage occurs in the battery, and therefore the battery is directly scrapped. After this welding defect is milled, the clamping mechanism 21 and the pressurization head 41 rotate simultaneously, to allow another welding defect on the next weld seam to be milled.

To prevent the battery housing from being milled through, a depth of the milled groove is controlled to be 1 mm.

An operating process of the battery milling apparatus of this embodiment is as follows.

A defective battery is loaded into the clamping mechanism 21 of the fixture 20, the clamping mechanism 21 clamps the defective battery, rotates by 90° under the drive of the rotating platform 23, and then moves to the milling station under the drive of the first moving mechanism 22.

The pressurization head 41 of the positive pressure application mechanism 40 moves along the third direction X, so that the pressurization head 41 is in close contact with a top cover of the defective battery, and the pressurization head 41 applies pressure through an electrolyte injection port and maintains the pressure.

The vision camera 31 moves along the first direction Z and the second direction Y to scan the defective battery. Simultaneously, the clamping mechanism 21 rotates the defective battery under the drive of the rotating platform 23 to cooperate with the vision camera for scanning, and positions of all welding defects of the defective battery are recorded.

The milling head 11 of the milling mechanism 10 moves according to a position of the welding defect fed back by the vision camera 31, to mill the welding defect of one weld seam.

After milling is completed, if the defective battery still has a welding defect on another side, the clamping mechanism 21 and the pressurization head 41 rotate simultaneously to the side where the welding defect is located, and the milling mechanism 10 mills the welding defect.

After all the welding defects are milled, the fixture 20 carries the battery back to the loading station for unloading.

Although this application has been described with reference to preferred embodiments, various improvements can be made thereto and components therein can be replaced with equivalents without departing from the scope of this application. In particular, as long as there is no structural conflict, the various technical features mentioned in the embodiments can be combined in any manner. This application is not limited to the specific embodiments disclosed herein, but includes all technical solutions falling within the scope of the claims.

## Claims

1. A battery milling method for milling a welding defect of a battery, comprising the following steps:
acquiring an image of a weld seam of a battery housing and acquiring a position of the welding defect according to the image of the weld seam; and
controlling a milling mechanism to move and mill the welding defect according to the position of the welding defect to form a milled groove.

2. The battery milling method according to claim 1, wherein the acquiring an image of a weld seam of a battery housing and acquiring a position of the welding defect according to the image of the weld seam comprises: acquiring at least two images of at least two weld seams of the battery housing and determining whether welding defects exist in all of the at least two weld seams; and if welding defects exist in all of the at least two weld seams, acquiring positions of at least two welding defects according to the at least two images.

3. The battery milling method according to claim 2, wherein the controlling a milling mechanism to move and mill the welding defect according to the position of the welding defect comprises: controlling the milling mechanism to sequentially mill the welding defects of the at least two weld seams.

4. The battery milling method according to claim 3, wherein after the milling mechanism is controlled to mill the welding defect of one weld seam, the battery is rotated to change a position of the battery relative to the milling mechanism, and the milling mechanism is controlled to mill the welding defect of another weld seam of the battery.

5. The battery milling method according to claim 3 or 4, wherein the acquiring an image of a weld seam of a battery housing comprises acquiring the image of the weld seam through a vision camera.

6. The battery milling method according to any one of claims 1 to 5, wherein the battery milling method further comprises: acquiring a length of the welding defect in an extending direction of the weld seam according to the image of the weld seam, acquiring a length of the milled groove according to the length of the welding defect, and controlling the milling mechanism to perform milling according to the length of the milled groove.

7. The battery milling method according to claim 6, wherein the length of the milled groove is greater than the length of the welding defect.

8. The battery milling method according to claim 7, wherein the length of the milled groove is 4 mm to 16 mm.

9. The battery milling method according to any one of claims 1 to 8, wherein the battery milling method further comprises, before the acquiring an image of a weld seam of a battery housing, detecting tightness of the battery housing.

10. The battery milling method according to any one of claims 1 to 8, wherein the battery milling method further comprises: detecting tightness of the battery housing during milling, and if air leakage of the battery housing is detected during milling, rejecting the battery.

11. The battery milling method according to claim 10, wherein the detecting tightness of the battery housing during milling comprises applying a positive pressure into the battery housing for detection.

12. The battery milling method according to any one of claims 1 to 11, wherein the welding defect comprises at least one of a formation defect and a joint defect.

13. The battery milling method according to claim 12, wherein the formation defect comprises at least one of a burst spot defect, a pinhole defect, a pit defect, and a shrinkage cavity defect.

14. The battery milling method according to claim 12, wherein the joint defect comprises cracks and/or undercuts.

15. A battery milling device, comprising:
an image acquisition mechanism (30), configured to acquire an image of a weld seam of a battery housing;
a milling mechanism (10), configured to perform milling; and
a controller, wherein the controller is electrically connected to the image acquisition mechanism (30) and the milling mechanism (10), the controller is configured to acquire a position of a welding defect according to the image of the weld seam acquired by the image acquisition mechanism (30), and the controller is further configured to control the milling mechanism (10) to move and mill the welding defect according to the position of the welding defect to form a milled groove.

16. The battery milling device according to claim 15, wherein the image acquisition mechanism (30) is configured to acquire at least two images of at least two weld seams of the battery housing, and the controller is configured to determine whether welding defects exist in all of the at least two weld seams according to the at least two images; wherein if welding defects exist in all of the at least two weld seams, positions of at least two welding defects are acquired according to the at least two images.

17. The battery milling device according to claim 15 or 16, wherein the image acquisition mechanism (30) comprises a vision camera (31).

18. The battery milling device according to claim 17, wherein the vision camera (31) is configured to be movably disposed in a plane parallel to a top surface of the battery housing.

19. The battery milling device according to any one of claims 15 to 18, wherein the battery milling device further comprises a fixture (20); the fixture (20) comprises a rotating platform (23) and a clamping mechanism (21) disposed on the rotating platform (23); the clamping mechanism (21) is configured to clamp a battery; and the rotating platform (23) is rotatably disposed to drive the clamping mechanism (21) to rotate so as to change a position of the battery.

20. The battery milling device according to any one of claims 15 to 18, wherein the battery milling device further comprises a positive pressure application mechanism (40), and the positive pressure application mechanism (40) is configured to apply a positive pressure into the battery housing for detection.

21. A battery production line, comprising the battery milling device according to any one of claims 15 to 20 and a battery repair welding device, wherein the battery repair welding device is configured to perform repair welding on the milled groove.

22. The battery production line according to claim 21, wherein the battery repair welding device comprises a wire feeding mechanism, and the wire feeding mechanism is configured to provide a length of a welding wire according to a length of the milled groove.
